## Europäisches Patentamt
## European Patent Office
## Office européen des brevets

(11) Veröffentlichungsnummer: **0 012 103**

**A1**

(12) **EUROPÄISCHE PATENTANMELDUNG**

(21) Anmeldenummer: **79730011.8**

(22) Anmeldetag: **03.12.79**

(51) Int. Cl.³: **G 06 K 7/10**

(30) Priorität: **04.12.78 DE 2852765**

(43) Veröffentlichungstag der Anmeldung:
**11.06.80 Patentblatt 80/12**

(84) Benannte Vertragsstaaten:
**AT BE CH DE FR GB IT LU NL SE**

(71) Anmelder: **SCHERING AKTIENGESELLSCHAFT Berlin
und Bergkamen
Müllerstrasse 170/178 Postfach 65 0311
D-1000 Berlin 65(DE)**

(71) Anmelder: **Projekt Elektronik GmbH
Stubenrauchstrasse 72
D-1000 Berlin 41(DE)**

(72) Erfinder: **Bellingkrodt, Klaus, Dr.
Sybelstrasse 28
D-1000 Berlin 12(DE)**

(72) Erfinder: **Gohlke, Bernd
Senftenberger Ring 24
D-1000 Berlin 26(DE)**

(72) Erfinder: **Krüger, Siegfried
Weinmeisterhornweg 137
D-1000 Berlin 20(DE)**

(72) Erfinder: **Ratsch, Joachim, Dr.
Scheelestrasse 5
D-1000 Berlin 45(DE)**

(72) Erfinder: **Ihlenburg, Lutz
Ellwanger Strasse 7
D-1000 Berlin 46(DE)**

(72) Erfinder: **Münter, Detlef
Rondellstrasse 4
D-1000 Berlin 37(DE)**

(72) Erfinder: **Heinze, Hartmut
Katharinenstrasse 27
D-1000 Berlin 31(DE)**

(54) **Verfahren und Vorrichtung zum Abtasten und Erkennen von Codezeichen.**

(57) Aufzeichnungsträger, wie Ampullen, mit darauf aufgebrachten Codezeichen werden mehrfach unabhängig voneinander mit einer Fernsehkamera während des Transportes auf dem Fließband abgetastet. Die Codezeichen, die ringförmig auf dem Aufzeichnungsträger aufgebracht sein können, werden während jeden Abtastungsvorganges als Videosignal erkannt und in einen Signalstrom binärer Signale umgewandelt, die mit einem gespeicherten Soll-Codezeichen verglichen werden. Sobald eine ausreichende Anzahl von Gut-Lesungen vorliegt, wird der Aufzeichnungsträger als richtig codiert identifiziert und kann zum gewünschten Ziel weitertransportiert werden. Das Videosignal, der Signalstrom binärer Signale und andere Hilfssignale können auf einem Monitor sichtbar gemacht werden.

./...

Fig.3

Rundkörpern, identifizieren zu können, gibt es verschiedene Möglichkeiten, die nach den nachstehenden Codegruppen unterteilt werden können:

1. Balkencode

2. Ringcode und

3. Zeichencode wie Buchstaben, Ziffern etc.

Um einen auf einem Rundkörper aufgebrachten Balkencode durch ein Lesegerät automatisch identifizieren zu können, müssen sehr gute Hell/dunkel-Kontrastverhältnisse vorliegen. Aus diesem Grunde können entweder nur stark reflektierende oder stark absorbierende Farbbalken aufgetragen werden, je nachdem, ob ein Positiv- oder Negativabtastverfahren (O- bzw. L-Signal entsprechend der Breite der Codebalken oder Bedruckungslücke) angewandt wird. Eine visuelle Zusatzkontrolle durch Farbunterschiede in der Bedruckung ist daher nur in beschränktem Umfang möglich. Bei der Verwendung des Balkencodes muß weiterhin die Ampulle in einer zusätzlichen Drehstation an dem Lesekopf des Lesegerätes zweimalig vorbeigedreht werden, um die Startposition für das Einlesen der Codeinformation festlegen zu können. Aufgrund der Maschinen- und Drucktoleranzen ist mit einer Gesamthöhe von ca. 6-8 mm für das Codefeld zu rechnen. Diese Platzvorhaltung kann z. B. für 1 ml-Ampullen nicht realisiert werden.

Bei Verwendung eines Einspur-Codelesers, der in Richtung der Die Erfindung betrifft ein Verfahren gemäß dem Oberbegriff des Anspruchs 1, sowie eine Vorrichtung zur Durchführung dieses Verfahrens.

Bei der Identitätskontrolle von einen gleich- oder taktförmigen Strom bildenden Aufzeichnungsträgern, wie bandgeförderten Stückgütern, wie Ampullen, Flaschen, Tuben u. ä. ist es erforderlich, daß deren Zweck- und Zielbestimmungen unverwechselbar mit größtmöglicher Sicherheit und eindeutig zur Anwendung kommen. Das gilt in einem besonders hohen verantwortlichen Maße für die Herstellung von flüssigen Arzneiformen, z. B. in Ampullen. Es ist dabei Sorge zu tragen, daß nach menschlichem Ermessen keine Fehler bei der Befüllung, Bedruckung und Verpackung auftreten, um die daraus resultierenden Gefahren bei der Verwendung in der ärztlichen Praxis zu vermeiden. Neben organisatorischen Vorkehrungen und stichprobenweisen Qualitätskontrollen gehört dazu die kontinuierliche Kontrolle der korrekten Zuordnung der einzelnen Bestandteile der verpackten Ampulle (Ampulle, Gebrauchsanweisung, Verpackung, Zubehör wie Säge oder dergleichen). Zu diesem Zweck werden die einzelnen Objekte mit maschinell lesbaren Codezeichen bedruckt, um Fehler des Menschen bei der visuellen Kontrolle auszuschließen.

Um Codezeichen auf Aufzeichnungsträgern, insbesondere auf

Ampullenlängsachse die Ringe eines Ringcodes abtasten würde, könnte ein Balkencode-Profil erkannt und direkt zur Verschlüsselung benutzt werden. Für die Verschlüsselung von max. 255 unterschiedlichen Codes (8 Bit) müßte ein Codefeld von ca. 18 mm incl. der Startinformation zur Codeeinlesung zur Verfügung stehen.

Wegen dieses hohen Platzbedarfs von 18 mm bei der Bedruckung kleiner Ampullen (z. B. 1-2 ml-Ampullen) scheidet diese Methode aus. Ein zusätzlicher Nachteil wäre noch der Aufwand für die Abtasteinrichtung, die eine potentielle Fehlerquelle ist.

Ein weiteres Verfahren bei der Ringcodierung ist das Aufbringen von Farbringen auf den Ampullenspieß. Der Ampullenkörper steht dann komplett für die erforderliche Etikettierung zur Verfügung.

Farbcode-Lesegeräte ermöglichen die Identifizierung von max. 6 fest vorgeschriebenen Farben, wobei die Ringe dicht an dicht aufgebracht werden können. Hierdurch wird bei gleichem Platzbedarf eine wesentlich höhere Informationsdichte gegenüber dem Hell/Dunkel-Code erzielt. Ein Farbringfeld von beispielsweise ca. 3 mm Breite ergibt eine max. Anzahl von $6^3 = 216$ Codevariationen, während bei der

0012103

Beringung im Hell/Dunkel-Code nur 4 Codevariationen möglich sind.

Bei Lesegeräten sind Farbfolge- und Farbspur-Lesegeräte zu unterscheiden. Bei den Farbfolge-Lesegeräten wird nur die Aufeinanderfolge unterschiedlicher Farben vom Gerät festgestellt, während beim Farbspur-Gerät auch noch die genaue Position des Farbringes als Identifizierungsmerkmal herangezogen wird. Zwar ist bei Farbfolge-Lesegeräten die höhere zulässige Toleranz bei der Farbberingung sowie der Ampullenführung ein Vorteil (Farbfolge: ca. $\pm$ 2 mm, Farbspur: $\pm$ 0,5 mm Gesamttoleranz), jedoch wirkt sich die Verringerung der Anzahl der möglichen Codevariationen nachteilig aus (z. B. ergeben 3 Ringe nur noch $6 \times 5^2 = 150$ verschiedene Möglichkeiten).

Es gibt ein Farbfolge-Lesegerät, bei dem die Farbring-Abtastung über einen Lichtstrahl erfolgt, der mittels eines optischen Systems, welches durch einen Motor angetrieben wird, über die Farbringe geführt wird. Das reflektierende Licht wird von befilterten Photodioden empfangen und entsprechend seiner Wellenlänge in elektrische Signale umgewandelt, die in einer elektronischen Auswerteeinheit verstärkt und digitalisiert werden.

0012103

Des weiteren gibt es ein Farbspur-Lesegerät, bei dem zusätzlich zur Farbringabtastung ein im Abtastkopf fest eingebautes Taktraster vom Lichtstrahl mit abgetastet wird. Die dabei entstehenden Reflexionsunterschiede werden von einem "Spurendetektor" (Zusatzphotodiode) erfaßt und erlauben so die Zuordnung der festgestellten Farbe zur Lage des Ringes.

Beide Verfahren der Farbcode-Erkennung haben jedoch den Nachteil eines großen technischen Aufwandes für Farbberingungsautomaten an jeder Ampullenabfüllinie zum Aufbringen der Codeinformation sowie Etikettiermaschinen für die Klartextbeschriftung bei den Verpackungsmaschinen.

Darüber hinaus bringt der Einsatz von fest vorgeschriebenen Farbtönungen bei den sogenannten Fink-Farben eine zusätzliche Unsicherheit.

Die grundsätzliche Möglichkeit der automatischen Erkennung von Zeichencodes, wie sie für ebene Objekte bereits existiert, läßt sich nicht ohne weiteres wegen der perspektivischen Verzerrungen auf runde Objekte wie Ampullenkörper übertragen. Der Vorteil einer guten visuellen Codegegenkontrolle durch Bedienungspersonal an den Maschinen würde durch hohe Programmierungskosten bei der dann erforderlichen Computer-Auswertung ausgeglichen. Derartige Programme, die automatisch anhand zusätzlicher Bezugskoordinaten die vorliegende Bildverzerrung beseitigen und das aufbereitete Zeichen dann mit einem vorgebbaren Sollzeichen vergleichen, müßten jedoch erst entwickelt werden. Es kommt hinzu, daß die Zeit für die Erfassung und Auswertung lediglich ca. 300 ms betragen darf, damit die vorhandene maschinentechnische Ausrüstung beibehalten werden kann. Bekannte Verpackungsmaschinen würden eine Erkennungszeit von 150-200 ms erforderlich machen.

Verfahren, bei denen der gesamte Bildinhalt nach Abspeicherung mit vorgebbaren Sollzeichen verglichen wird, benötigen Vorrichtungen auf der Basis von Prozeßrechneranlagen, deren Kapazität aufgrund der wiederkehrenden Information in jeder Abtastung nicht ausgenutzt wird, da in jeder Abtastung der gleiche Erkennungsprozeß erforderlich ist.

Der Erfindung liegt die Aufgabe zugrunde, ein Verfahren und eine Vorrichtung zur Durchführung dieses Verfahrens zu schaffen, mit welchen gegenüber den Verfahren mit einmaliger Abtastung und Erkennung eine höhere Erkennungssicherheit erzielt und dabei der große technische Aufwand prozeßrechnergesteuerter Zeichenerkennungsanlagen zur Auswertung des gesamten Codezeichens vermieden wird, ohne bereits vorhandene maschinentechnische Einrichtungen an Förderanlagen konstruktiv zu verändern und ohne zusätzliche mechanische Hilfseinrichtungen, wie z. B. Ampullendrehstationen oder dergleichen einzusetzen.

Dazu sollen hohe und variable Transportgeschwindigkeiten,
dichter Transportfluß verbunden mit schnellst-möglicher
Erkennungszeit erreicht, verschiedene          Transportlagen ermöglicht, mehr als eine Ampulle gleichzeitig erkannt und die Einräumung von Lagetoleranzen bei bestimmten
Fehlausrichtungen der Ampullen zugelassen werden.

Die Aufgabe wird erfindungsgemäß durch die im Anspruch 1
gekennzeichneten Merkmale gelöst.

Die weitere Ausgestaltung der Erfindung wird gemäß der
kennzeichnenden Merkmale der Ansprüche 2 bis 17 gelöst.

Die Vorrichtung, welche die erfindungsgemäße Aufgabe beispielsweise bei der kontinuierlichen Identifikation von
bandgeförderten Ampullen löst, besteht aus einer Projektions-Anordnung (3.4, 4.2), einer optoelektronischen
Wandler-Anordnung als Abtast-Vorrichtung (3.1) und einer
elektronischen Erkennungs- und Auswerte-Einheit (3.5, 3.6,
3.7, 3.8).

Im einzelnen besteht die Projektions-Anordnung aus einer
elektronisch  geregelten Beleuchtungs-Vorrichtung (3.4)
mit einem Beleuchtungs-System zur Erzeugung eines parallelen Strahlenbündels (4.1, 4.4, 4.5, 4.6, 4.7, 4.10), einem Dämpfungsglied (4.8) zur Erzeugung einer gleichmäßigen Leuchtdichte über dem Abtastfeld (4.9) und einem Abbildungssystem -Kameraoptik- (4.2). Die optische Achse der gesamten Projektions-Anordnung liegt vorzugsweise unter einem Winkel $\alpha$ von $10^{\circ}$ bis $40^{\circ}$ zur Transportbahnebene. Die elektronische Erkennungs- und Auswerteeinheit besteht aus zentraler Takteinheit (3.5), einem Videosignalverstärker mit nachgeschaltetem Schwellenwertschalter als Pegel-Separierungs-Anordnung (3.6), einer mehrstufigen Anordnung (3.7) zur Erzeugung charakteristischer Erkennungsmerkmale ("Mark", "Code") und einer Auswerte-Anordnung (3.8) ("Auswurf"). In einer vorteilhaften Ausgestaltung der Erfindung besteht die elektronische Erkennungs- und Auswerteeinheit noch aus einer Bildmisch-Einrichtung (3.9) zur visuellen Kontrolle und Justage der Anlage.

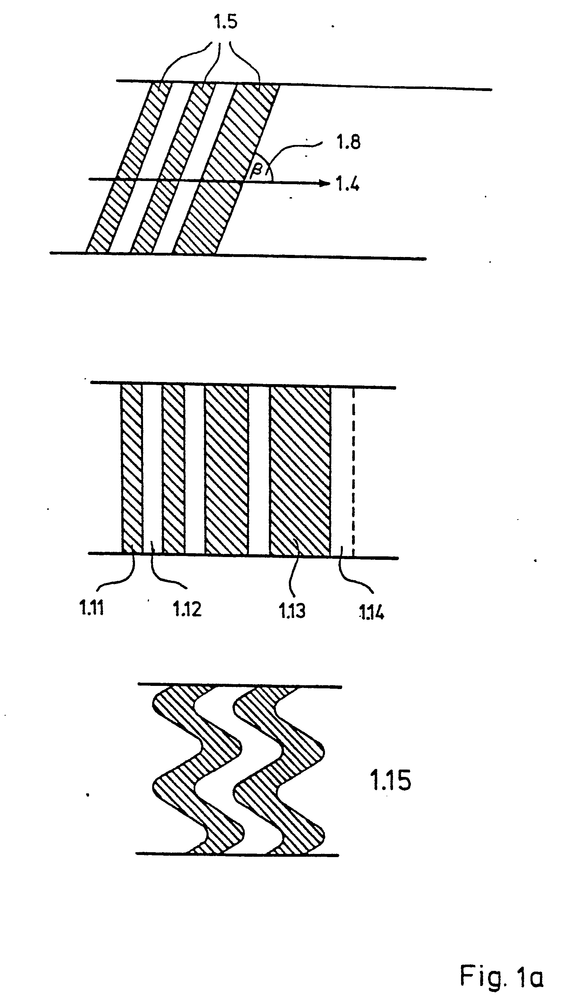

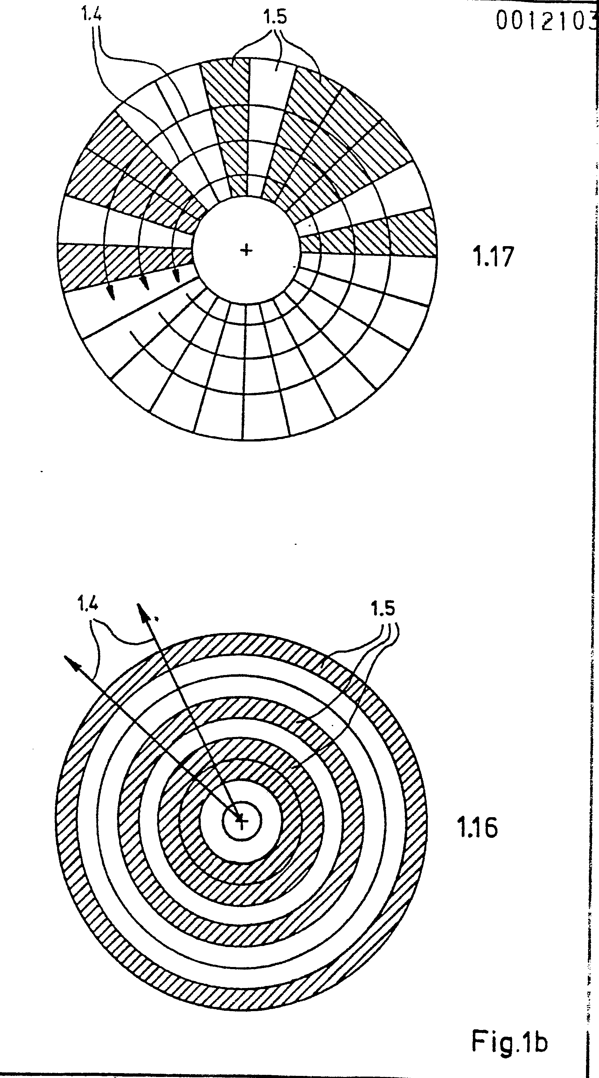

Zur Abtastung und Erkennung von codierten Zeichenmustern nach Fig. 1 b werden nur die Ablenkmittel des Bildwandlers dem geforderten Abtastprogramm angepaßt. Die Ablenkfunktion zur Abtastung von Zeichenmustern in Form von Kreisringsektoren bestehen aus einer sägezahnförmigen Amplitudenmodulation (Bildfrequenz) von Sinus- bzw. Cosinusfunktionen konstanter Kreisfrequenz, die die Kreisringfrequenz (Zeilenfrequenz) darstellt. Durch Vertauschung von Zeilen- und
Bildfrequenz erhält man die Ablenkfunktionen zur Abtastung von Zeichenmustern mit konzentrischen Kreisringen.
Dabei werden die bekannten Ablenkprogramme und Einrichtungen zur Sichtbarmachung von Radarbildern (Radarröhre)
verwendet.

Die mit der erfindungsgemäßen Vorrichtung erzielbaren
Vorteile bestehen insbesondere darin, daß aufgrund des
neuen Verfahrens die Erkennung des gesamten Informationsinhaltes von einem Zeichenmuster auf die mehrfache getrennte Erkennung einzelner gleichwertiger Zeilen-Informationsinhalte (1.4) reduziert wird, womit zur Erkennung eines
Zeichenmusters paralleler linienhafter Strukturen mit
höchst möglicher Sicherheitsquote nicht die Abspeicherung
des gesamten Informationsinhaltes dieses Zeichenmusters
erforderlich wird, sondern nach der Abtastung eines Zeilen-
Informationsinhaltes kann unter minimalem Aufwand an Speichern die Abspeicherung dieses Zeilen-Informationsinhaltes
sowie dessen Erkennung vor der nächsten Abtastung vorgenommen werden. Der zeitliche Aufwand für die Erkennung wird
dadurch gering gehalten und das Verfahren der Mehrfachabtastung und Mehrfacherkennung wirtschaftlich realisierbar,
weil bei einer Abtastung nicht sämtliche anfallenden Einzel-Informationen gespeichert und ausgewertet werden, sondern nur die durch einen wohldefinierten, den charakteristischen Merkmalen des jeweiligen Zeichenmusters entsprechend angepaßten Algorithmus bestimmten Einzel-Informationsinhalte, ohne daß die geforderte hohe Erkennungs-Sicherheit verringert oder vernachlässigt würde.

Weitere erfindungsgemäße Vorteile bestehen insbesondere darin, daß der einfach und aus Sterilitätsgründen besonders geeignete Siebdruck für das Aufbringen der Code-Information auf Ampullen zusammen mit der Klartext-Beschriftung in einem Arbeitsgang erfolgen kann, so daß z. B. zusätzliche Farbberingungsautomaten und Etikettiermaschinen nicht notwendig sind. Konstruktive Änderungen an der maschinentechnischen Ausrüstung brauchen nicht vorgenommen werden, um die üblichen Lagetoleranzen des Godefeldes (3.3), wie sie durch das Einlegen der Ampulle (3.2) in die Verpackung bzw. durch die Fertigungstoleranzen der Ampulle (3.2) mit den dazugehörigen Drucktoleranzen entstehen, zu kompensieren, da die Lageorientierung automatisch und berührungslos durch den aufgebrachten Startring erfolgt. Die Mehrfach-Abtastung, bei der jede Zeile einzeln bewertet wird, läßt eine Entscheidung zu, bei der die statistischen Gesetzmäßigkeiten und systematischen Gegebenheiten in der Auswerteeinheit ihre Berücksichtigung finden, so daß die Wahrscheinlichkeit für das Auftreten von Substitutionen und Rückweisungen gegenüber der Einfachlesung stark vermindert wird.

Die Fernsehbildauswertung ist sowohl für die Codeerkennung bei stehendem als auch bei bewegtem Objekt geeignet, wenn die Durchlaufzeit des Code-Feldes innerhalb des festen Bildausschnittes > 20 ms (Abtastzeit für ein Halbbild) beträgt. Die erfindungsgemäße Vorrichtung kann deshalb sowohl bei taktweise oder als auch bei kontinuierlich arbeitenden Verpackungsmaschinen eingesetzt werden.

Ein weiterer Vorteil der erfindungsgemäßen Vorrichtung ist darin zu sehen, daß auch bei Schräglage der Code-Information auf dem Aufzeichnungsträger in bezug auf die Transportrichtung (2.6) eine einwandfreie Erkennung möglich ist, da bei kleinen Winkeländerungen des Abtastwinkels $\beta$ (1.8) keine Änderung des Vergleichsmaßstabes notwendig ist.

Zur weiteren Ausbildung der erfindungsgemäßen Vorrichtung kann die Anzahl der Codiermöglichkeiten bei gleicher Codezeichengröße und bei prinzipiell gleichem Auswerteverfahren dadurch erhöht werden, daß anstelle der beschriebenen Schwarz/Weiß-Kamera eine Farbfernseh-Kamera verwendet wird. Die Auswertung erfolgt dann in den Farbkanälen wieder verfahrensgemäß. Die Anzahl der Codierungsmöglichkeiten wird durch die verwendeten Farben für die Code-Ringe somit um ein vielfaches erhöht.

Die Umwandlung des Zeichenmusters in ein elektrisches Signal, die erfindungsgemäß mit einer Fernsehkamera erfolgt, kann an sich auch durch eine Mosaik-Anordnung von Foto-Detektoren oder durch eine Lichtpunkt-Abtastvorrichrung, bestehend aus einer ablenkbaren Kathoden-Strahlröhre und einer Foto-Detektorenanordnung, oder durch eine optomechanische Vorrichtung vorgenommen werden.

Die zu einem Abtastvorgang erforderliche Relativbewegung zwischen Abtaststrahl und abzutastendem Zeichenmuster kann anstelle einer Ablenkung des Abtaststrahls im Prinzip auch durch eine geeignete Bewegung des Zeichenmusters mit Hilfe von maschinentechnischen Einrichtungen geschehen.

Im folgendem wird die erfindungsgemäße Vorrichtung an Hand der Zeichnungen Fig. 1 bis 11 beispielsmäßig beschrieben:

Es zeigen Fig. 1a und 1b     Struktur der Unterscheidungsmerkmale

Fig. 2     Relativbewegungen

Fig. 3     Blockschema

Fig. 4     Abtastvorrichtung

Fig. 5     Takteinheit

Fig. 6     Pegel-Separierungs-Anordnung

Fig. 7     Zeitverläufe zu Fig. 6

Fig. 8     Erkennung

- 13 -

0012103

Fig. 9          Zeitverläufe zu Fig. 8

Fig. 10         Auswertung

Fig. 11         Bildmischer

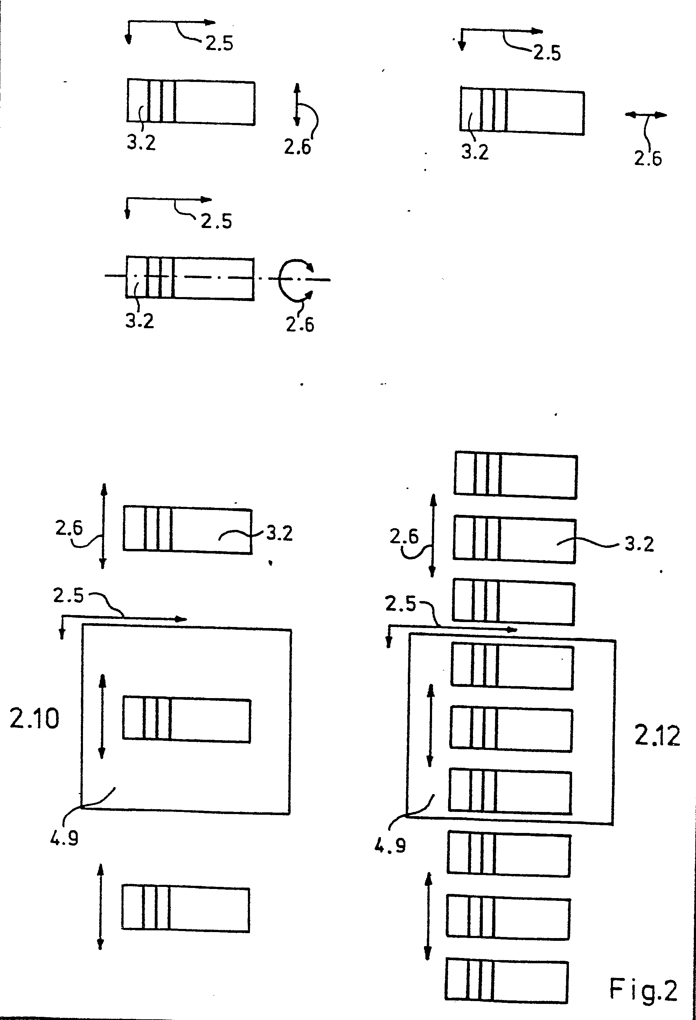

Fig. 2 zeigt verschiedene Möglichkeiten der Relativbewegungen, gegeben durch die Bewegung (2.6) der Aufzeichnungsträger (3.1) und der Bewegung (2.5) der Abtastvorrichtung (3.1) und deren Abtastmittel. Die Aufzeichnungsträger können sowohl einzeln (2.10) als auch in Gruppen (2.12) an der Abtastvorrichtung mit einer Transportgeschwindigkeit zwischen Null und einem maximalen Wert vorbeigeführt werden. Vorzugsweise wird die Abtastrichtung (2.5) so gewählt, daß sie senkrecht zu den Codezeichen und damit parallel zur Längsachse der Ampulle verläuft.

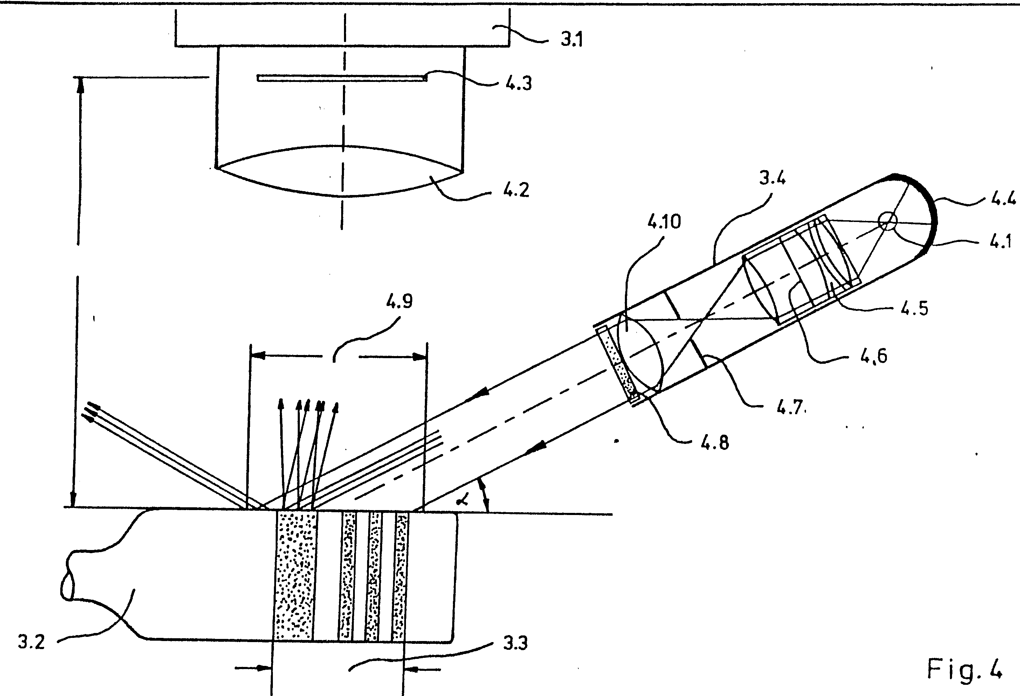

Das Blockschema Fig. 3 zeigt die komplette Vorrichtung, bestehend aus der Ampulle (3.2), auf die das Codefeld (3.3) aufgebracht ist, der Fernsehkamera (3.1), die über eine Makro-Abbildungsoptik (4.2) das aufgenommene Bild zeilenweise abtastet, dem Beleuchtungssystem (3.4), das über eine elektronisch geregelte Lichtquelle für eine gleichmäßige Ausleuchtung des Codefeldes (3.3) sorgt, dem Taktgeber (3.5), der die Verstärkung der Video-Signale sowie die Synchronisation der einzelnen Bausteine dieser Vorrichtung bewirkt, der Pegel-Separierungs-Anordnung (3.6), die das angebotene Video-Signal in eine Impulsfolge gleicher Amplitude wandelt, der Mark-Code-Erkennungseinheit (3.7), die die Impulsfolge der Pegel-Separierungs-Anordnung (3.6) in Markierungsring und Coderinge mit deren Positionierung entschlüsselt, der Auswertungseinheit (3.8), die aufgrund des vorgegebenen Verhältnisses der Anzahl von GUT-Lesungen zur Gesamtzahl der Lesungen entscheidet, ob insgesamt das Codefeld (3.3) richtig erkannt wurde oder ob die Ampulle (3.2) ausgeworfen werden soll, sowie der Bildmischereinheit (3.9), in der die Signalverläufe aus den verschiedenen Einheiten der Vorrichtung über einen Monitor (3.10) sichtbar gemacht werden können und damit zu einer Vereinfachung der erforderlichen Justierung von Fernsehkamera (3.1) und Beleuchtungssystem (3.4) beitragen.

Die Abtastvorrichtung, dargestellt durch eine Fernsehkamera (3.1) in Fig. 4, ist über einer Fördereinrichtung senkrecht zur Ebene der Transportbahn angeordnet. Die auf der Transportbahn unter der Fernsehkamera (3.1) mit etwa konstanter Geschwindigkeit vorbeigeführten Aufzeichnungsträger, z.B. in Form von Spießampullen (3.2), tragen je auf dem Umfang des Ampullenkörpers mittels Siebdruckverfahren ein gleichzeitig aufgebrachtes Klarschriftbild und ein Codefeld (3.3), wobei dieses beispielsweise in einer Höhe von 7-8 mm über dem Ampullenboden unterhalb des Klarschriftfeldes angeordnet ist. Für das Codefeld (3.3) steht eine ringförmige Zone von ca. 4,4 mm Höhe zur Verfügung, in der die Codeinformation in Form von codierten Ringen mit bis z.B. 255 Verschlüsselungen vor-

liegt.

Mittels einer Projektionsanordnung, bestehend aus einer
Beleuchtungseinrichtung (3.4) mit einem elektronisch geregelten Beleuchtungssystem (4.1, 4.4, 4.5, 4.6, 4.7,
4.8, 4.10) und einem Abbildungssystem (Kameraoptik) (4.2)
werden die flächenhaften Kontraste durch optische
Remission dargestellt und auf die in der Projektionsebene
liegenden Strahlungsempfänger (Photokathode 4.3) projeziert.

Die Beleuchtungseinrichtung (3.4) besteht zu.B. aus einer
elektronisch geregelten Stromquelle zur Versorgung der
Halogen-Lampe (4.1) als Strahlungsquelle hoher Lebensdauer zur Erzeugung weißen Lichtes, einem Kaltlicht-Hohl-
Spiegel (4.4) zur Vergrößerung des Lichtstromes, einer
Beleuchtungs- und Kondensoroptik (4.5) zur Erzeugung
eines parallelen Strahlenbündels, einer Kondensoriris
(4.6), einer Leuchtfeldblende (4.7), die als Eintrittsöffnung der Kondensoroptik am Ort der Abtastung über die
Abbildungsoptik (4.10) als Sekundärlichtquelle in geometrischer Form und Abmessung des Abtastfeldes abgebildet
wird, sowie einem Dämpfungsglied (4.8) zur Erzielung einer
über dem Abtastfeld gleichmäßig verteilten Leuchtdichte.
Die optische Achse der Beleuchtungseinrichtung (3.4) ist
unter einem Winkel $\alpha$ von etwa $10^{\circ}$ bis $40^{\circ}$ zur Transportbahnebene und senkrecht zur Transportrichtung angeordnet,
so daß das Abtastfeld (4.9) längs der Hauptachse des Ampullenkörpers (3.2) von der der Beleuchtungseinrichtung (3.4) zugewandten Lage des Ampullenbodens beaufschlagt wird, um Durchstrahlungsfehler zu vermeiden.

Das Abtastfeld besteht aus dem bedruckten Codefeld (3.3) mit Strichen gleicher optischer Eigenschaft mit unregelmäßig reflektierender Wirkung (Streuung) durch die Rauhigkeit der aufgetragenen Farbpigmente, die getrennt sind von unbedruckten Strichen gleicher entgegengesetzter optischer Eigenschaft der regelmäßig reflektierenden glatten Oberfläche der Glasampulle (3.2).

Die Anordnung bewirkt, daß unter Ausnutzung dieses unterschiedlichen entgegengesetzten Verhaltens ein optimaler flächenhafter Kontrast erzielt wird, weil außer den Anteilen der unregelmäßig reflektierenden Strahlung keine regulär reflektierten Strahlen in den Strahlengang der Abbildungsoptik (4.2) gelangen können. In der Projektionsebene der Abbildungsoptik (4.2) erscheinen so die bedruckten Striche des Codefeldes (3.3) hell, die unbedruckten Striche dunkel. Von diesem auf den Strahlungsempfänger (4.3) der Fernsehkamera (3.1) projezierten analogen Zeichenmuster werden durch Umwandlung der optischen Kontraste entsprechend den Bildpunkthelligkeiten Photoelektronenströme auf einer Speicherplatte erzeugt, die ein getreues elektrisches Ladungsbild darstellen, welches dann mit einem Kathodenstrahl zeilenweise abgetastet wird, so daß ein Signalstrom analoger Video-Signale abgenommen werden kann.

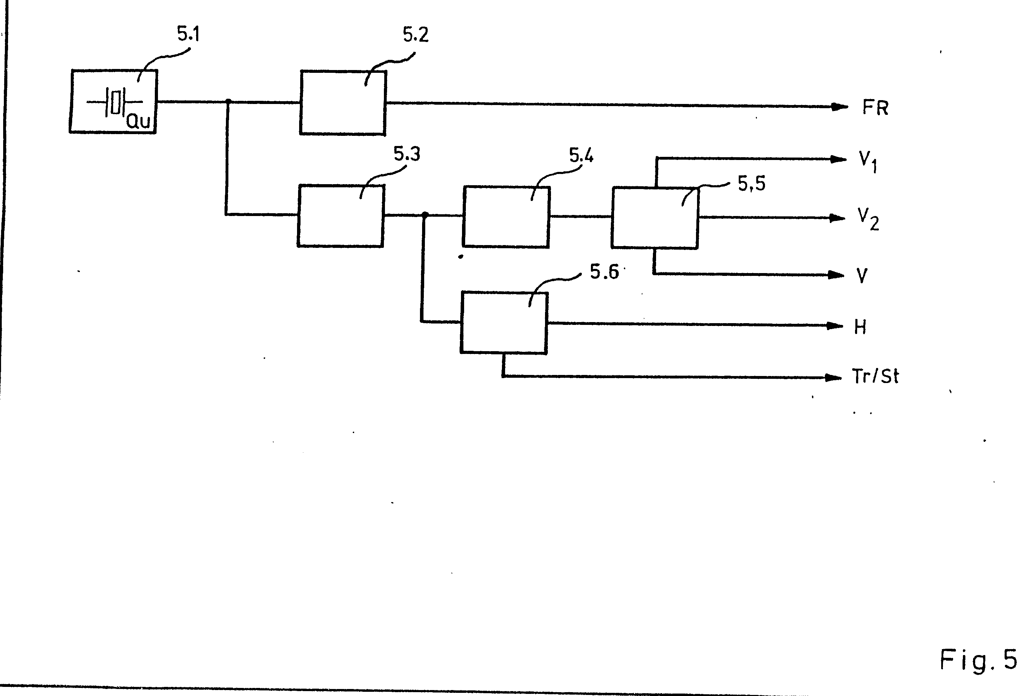

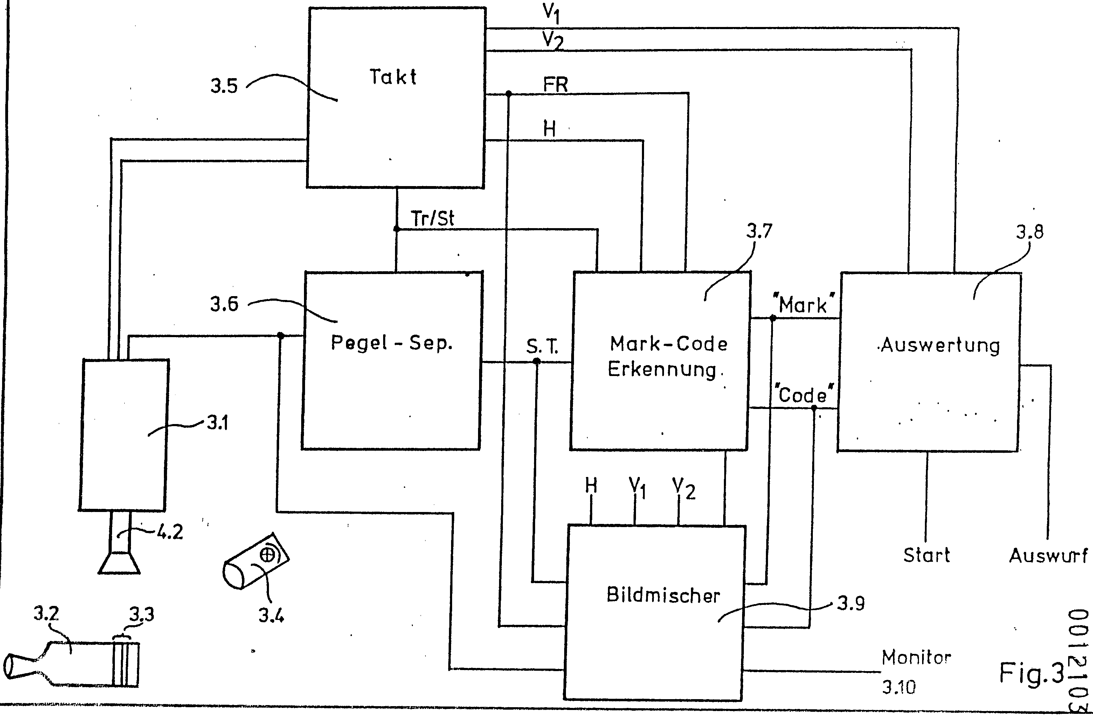

Die Funktionsbeschreibung des elektronischen Signalverarbeitungsweges wird anhand der Fig. 5 bis 11 dargestellt.

Die zentrale Takteinheit (3.5) erzeugt mit einem hochstabilen Quarz-Generator (5.1) und der Teilerstufe
(5.2) die zur Erkennung des Startringes und der Coderinge notwendige Referenzfrequenz FR. Aus dieser Frequenz werden durch entsprechend gewählte Teilerstufen
(5.3, 5.4, 5.5, 5.6) die zur Synchronisation der Kamera
(3.1) benötigten Steuersignale H und V hergeleitet und
der Kamera (3.1) zugeführt. Auch die zur Auswertung benötigten Signale V1, V2 und Tr/St werden abgeleitet.

Das von der Kamera (3.1) abgegebene analoge Video-Signal
enthält gemäß der zeilenweise erfolgten Kathodenstrahlenabtastung die Hell-Dunkel-Information des abgetasteten
Codeaufdruckes. Die Auswertung dieser Information erfolgt
seriell im Takt des H(Horizontal)-Steuersignals. Die Amplitude und der Mittelwert des analogen Video-Signals
sind in Abhängigkeit von der Beleuchtung des Aufzeichnungsträgers und der Beschaffenheit der Unterscheidungsmerkmale (Codeaufdruck) starken Schwankungen unterworfen, die
eine Digitalisierung mittels einer festen Entscheidungsschwelle nicht zulassen.

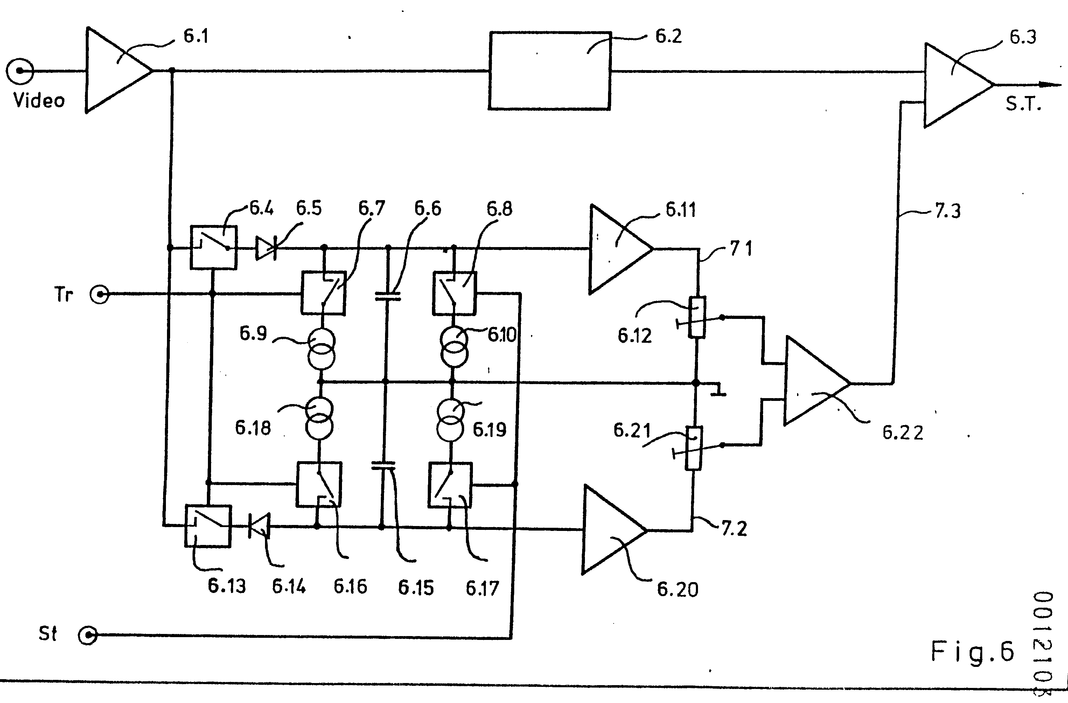

In der Pegel-Separierungs-Anordnung (Fig. 6) wird das Videosignal durch einen Videoverstärker (6.1) rückwirkungsfrei ausgekoppelt, der Schwellwerteinheit und dem Filter (6.2) zugeführt, so daß der nachfolgende Schmitt-Trigger (6.3) durch Vergleich mit der in der Schwellwerteinheit gewonnenen Entscheidungsschwelle (7.3) und dem gefilterten Videosignal eine optimale Digitalisierung durchführt.

Hierzu wird das periodische Videosignal in zwei Phasen eingeteilt: Track- und Store-Phase. Diese Aufteilung wird in der Takteinheit (3.5) erzeugt und der Schwellwerteinheit zugeführt. Diese besteht aus zwei unabhängigen Spitzenwertmessern: Einem positiven Spitzenwertmesser (6.4, 6.5, 6.6, 6.7, 6.8), den Stromquellen (6.9, 6.10), dem hochohmigen Trennverstärker (6.11), dem Abschwächer (6.12) und einem negativen Spitzenwertmesser (6.13, 6.14, 6.15, 6.16, 6.17), den Stromquellen (6.18, 6.19), dem hochohmigen Trennverstärker (6.20) und dem Abschwächer (6.21).

Während der Track-Phase werden die elektronischen Schalter (6.4, 6.13) sowie über (6.7, 6.16) die Stromquellen (6.9) und (6.18) durch das Track-Signal eingeschaltet. Die Speicherkondensatoren (6.6) und (6.15) werden auf die positiven (7.1) bzw. negativen (7.2) Spitzenwerte aufgeladen.

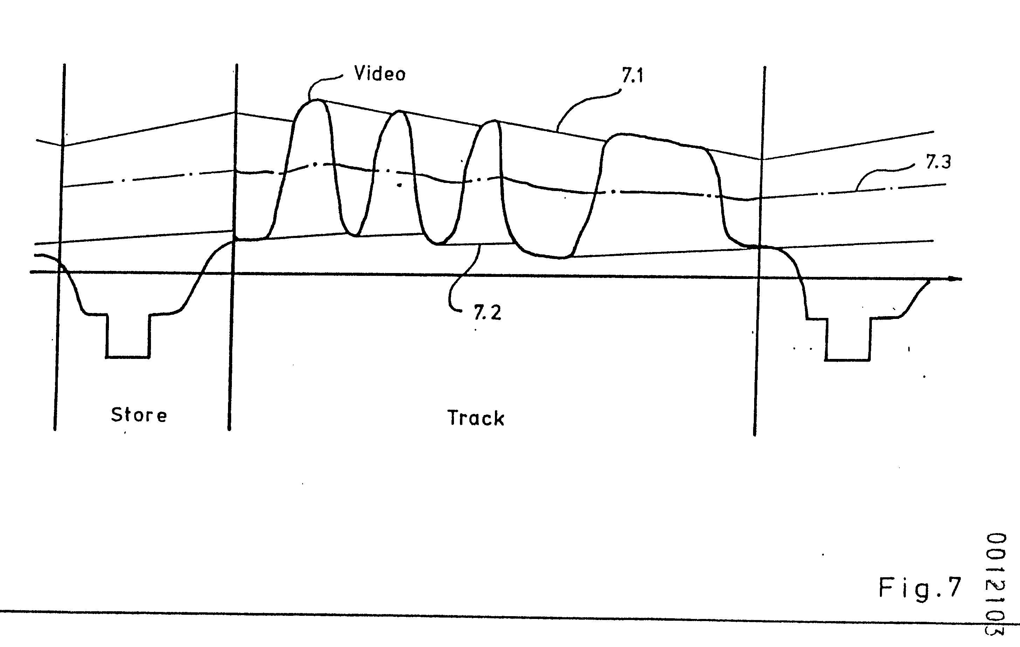

Zwischen zwei aufeinanderfolgenden Maximal- bzw. Minimalwerten wird (6.6) durch (6.9) mit einer anders gewählten Steigung aufgeladen, so daß (6.6) und (6.15) auf folgende kleinere oder größere Maximal- bzw. Minimalwerte vorbereitet sind und deren Spitzenwerte übernehmen können. Auf diese Weise wird in guter Näherung eine obere (7.1) bzw. untere Hüllkurve (7.2) gefunden (Fig. 7). Über die Abschwächer (6.12) und (6.21) geschieht in (6.22) die Aufsummierung dieser Hüllkurven, die bei passender Einstellung der Abschwächer die benötigte Entscheidungsschwelle (7.3) ergibt.

Während der Store-Phase werden die Schalter (6.4, 6.13) und die Stromquellen (6.9, 6.18) sowie (6.7, 6.16) abgeschaltet und die Stromquellen (6.10, 6.19) durch (6.8, 6.17) eingeschaltet. Hierdurch werden beide Speicherkondensatoren dergestalt auf- bzw. entladen, daß sie bei Beginn der Track-Phase annähernd auf die erwarteten Maximal- bzw. Minimalwerte vorbereitet sind. Diese Schwellwerteinheit kann sich innerhalb einer Abtastung relativ hohen Amplituden (1:10) und Mittelwertschwankungen anpassen. Hierdurch ist es möglich, einen sehr großen Teil der Abtastungen auszuwerten. Der Schmitt-Trigger erzeugt durch Vergleich des analogen, gefilterten Videosignals mit der Entscheidungsschwelle ein der Hell-Dunkel-Information entsprechendes Digitalsignal. Der Schmitt-Trigger wird mit einer Hysterese versehen, die trotz des unvermeidlichen Rauschanteiles des analogen Videosignals eine Digitalisierung gewährleistet.

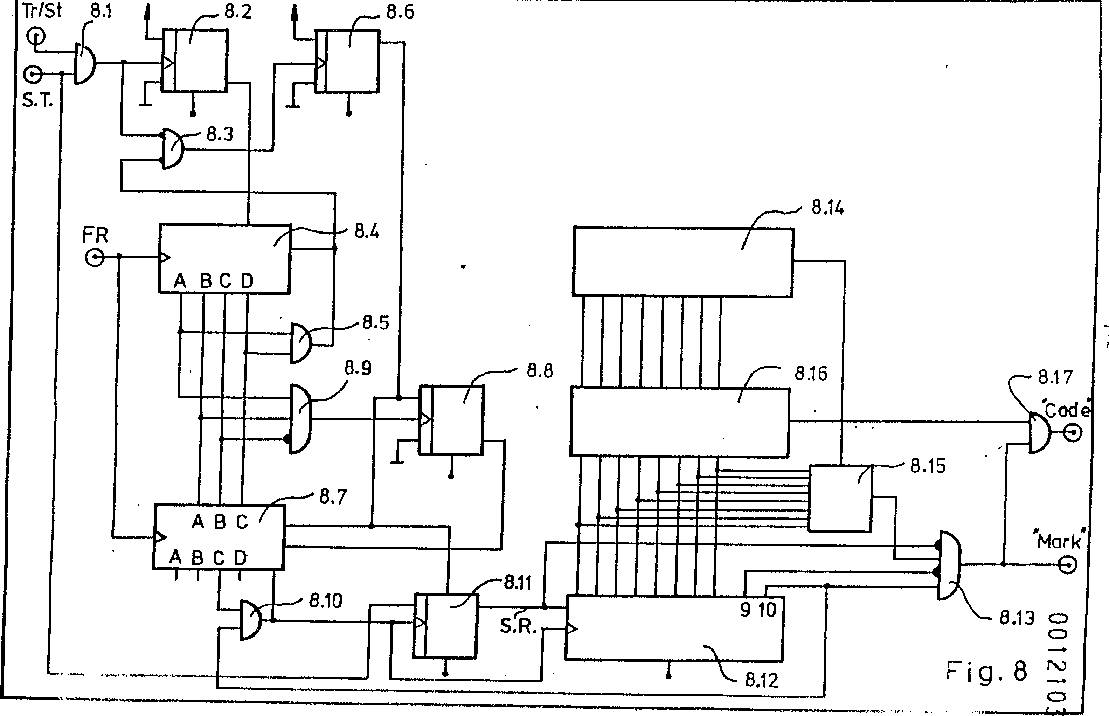

Fig. 8 zeigt im Schaltbild die Startring- und Codeerkennung (3.7). Das Schmitt-Trigger-Signal S.T. wird dem Gatter (8.1) zugeführt, welches das Schmitt-Trigger-Signal nur während der Track-Phase, gesteuert durch Tr/St, dem Flip-Flop (8.2) und Gatter (8.3) zuführt.

Der erste Schmitt-Trigger-Signal enthaltene 0/1 Übergang (Anfang des Markierungsringes) setzt Flip-Flop (8.2) und gibt den Zähler (8.4) frei. Der Zähler (8.4) zählt die am Clock-Eingang anliegenden Impulse der Referenzfrequenz FR. Das Ergebnis dieser Zählung steht an den binär codierten Ausgängen A, B, C und D an. Wird der Zählerstand 9 erreicht, stoppt Gatter (8.5) den Zähler (8.4) und verhindert durch Gatter (8.3) die Übernahme eines 1/0 Überganges (Ende des Markierungsringes) vom Schmitt-Trigger-Signal durch Flip-Flop (8.6). Die Eingangskombination von Gatter (8.5) bestimmt somit die Maximalbreite eines Markierungsringes. Ist die wirkliche Breite kleiner als die Maximalbreite, so wird Flip-Flop (8.6) gesetzt, der Zähler (8.7) freigegeben, der den durch zwei dividierten Zählerstand von Zähler (8.4) übernommen hat. Die Freigabe wird über Flip-Flop (8.8) verhindert, falls Zähler (8.4) eine durch die Eingangskombination von Gatter (8.9) vorgegebene Kombination noch nicht erreicht hat (Minimalbreite). Der Zähler (8.7) zählt von der Mitte der wirklichen Breite des Startringes ausgehend, mittels Gatter (8.10), modulo 5, da die Idealbreite eines Coderinges fünf Impulsen der Referenzfrequenz FR entspricht.

Durch den Zähler (8.7) wird auch Flip-Flop (8.11) gesetzt und damit die Information, daß ein Startring erkannt wurde, im Schieberegister (8.12) gespeichert. Die durch Gatter (8.10) gewonnenen Mittenimpulse takten das Schmitt-Trigger-Signal S.T. über Flip-Flop (8.11) in das 10 Bit Schieberegister (8.12). Erreicht die Information das Ende des Schieberegisters, so wird über Gatter (8.10) ein weiteres Eintakten verhindert.

An den Ausgängen 10 und 9 vom Schieberegister (8.12) und am Ausgang von Flip-Flop (8.11) steht die Information des erkannten Startringes, der darauffolgenden Pause und der auf den Code folgenden Pause an und wird Gatter (8.13) zugeführt. Von der Sollcodevorgabe (8.14) wird dem Schalter (8.15) die Lage des letzten Coderinges (Endring) übermittelt. Dieser schaltet die Information des dem Endring zugeordneten Ausganges des Schieberegisters an Gatter (8.13). Am Ausgang von Gatter (8.13) liegt nur dann das Signal "Mark" (Markierungsring erkannt) an, wenn diese vier Bedingungen erfüllt sind. Die Ausgänge 3 bis 8 des Schieberegisters werden den Vergleicher (8.16) zugeführt, der auf Übereinstimmung mit dem Soll-code abfragt. Das Ergebnis dieses Vergleichs liegt nur dann an Gatter (8.17) als "Code" an, falls an Gatter (8.13) "Mark" vorliegt. Am Ende eines jeden Abtastvorganges werden die Flip-Flops und das Schieberegister durch das Signal H in die Ausgangsposition zurückgesetzt.

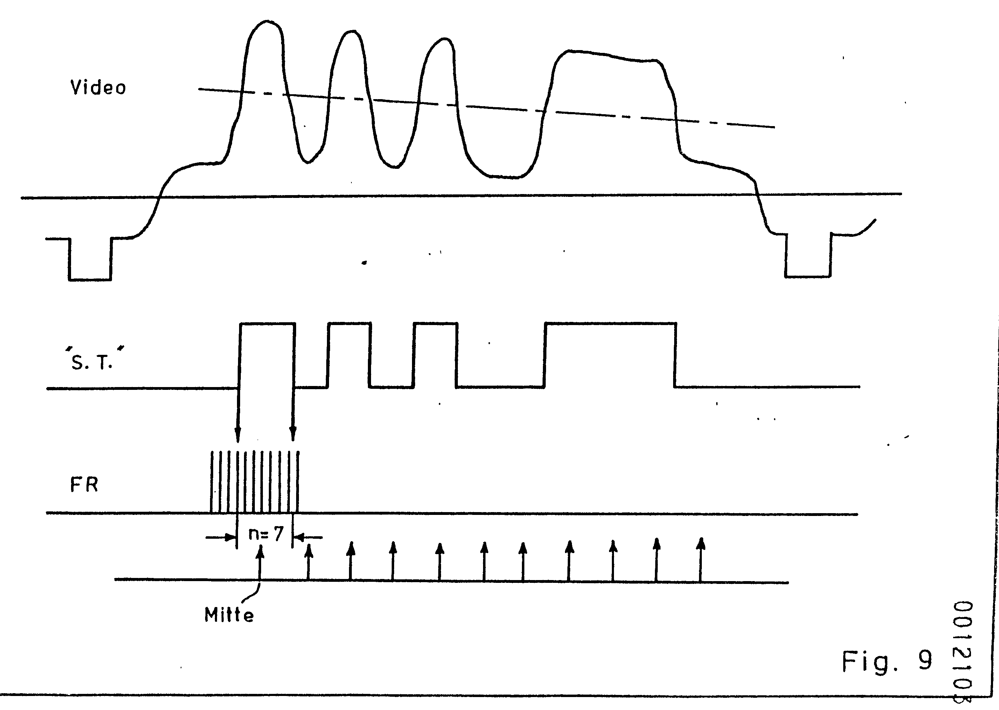

Fig. 9 zeigt den Signalverlauf in der Erkennungslogik. Das analoge Videosignal ist nach Durchlaufen der Schwellwert-Schaltung digitalisiert. Aus der Referenzfrequenz FR wird durch Abzählen die Breite des 1. Ringes (Markierungsring) und durch Halbieren dessen Mitte ermittelt. Hiervon ausgehend werden durch Abzählen die "Soll"-Mitten aller möglichen Codebalken (8 Stück) ermittelt. Wenn zu diesen Zeitpunkten ein S.T.-Signal vorliegt, wird eine Information in das Schieberegister (8.12) eingegeben. Nach Abschluß der Abtastung steht an den Ausgängen des Schieberegisters (8.12) die erkannte Code-Information.

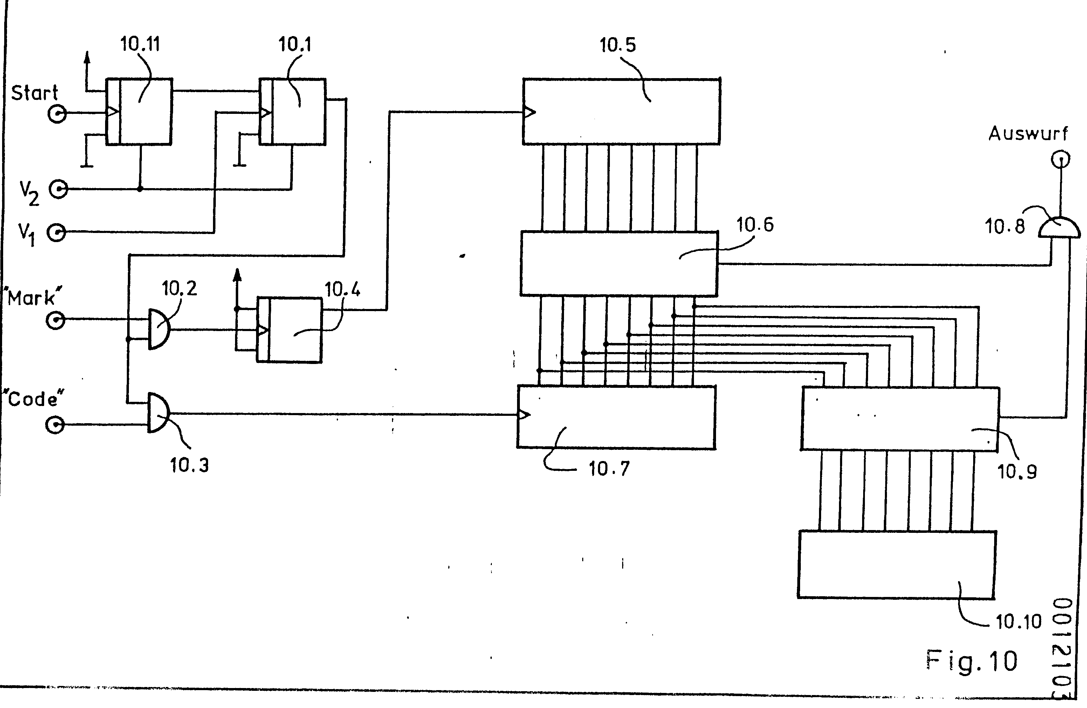

Die Funktion der Auswerteeinheit (3.8) ist in Fig. 10 gezeigt. Ein an der Verpackungsmaschine angebrachter Kontakt (Mikroschalter) liefert ein Startsignal "Start" zur Auswertung der Abtastungen, das in Flip-Flop (10.11) gespeichert wird. Von der Takteinheit werden die Signale V1 und V2 bezogen, die Anfang und Ende und somit die Maximalzahl der Abtastungen, sowie die Lage des genutzten Abtastfeldes (4.9) im Bildbereich festlegen. Liegen diese Signale an, gibt Flip-Flop (10.1) die Gatter (10.2) und (10.3) frei. Das Signal "Mark" wird Flip-Flop (10.4) zugeführt, welches die Anzahl der Impulse dieses Signals halbiert. Hierdurch ergibt sich eine Relativvorgabe von 50 %. Diese 50 % der Impulse werden im Zähler (10.5) aufsummiert. Das binär codierte Ergebnis wird dem Vergleicher (10.6) als Sollvorgabe zugeführt. Das Signal "Code" wird dem Zähler (10.7) direkt zugeführt und summiert. Das am Zähler (10.7) binär codierte Ergebnis wird dem Vergleicher (10.6) als Ist-Vorgabe zugeführt. Das Ergebnis des durch (10.6) vollzogenen Vergleiches wird dem Gatter (10.8) zugeführt. Die Ist-Vorgabe wird auch dem Vergleicher (10.9) zugeführt und mit einer fest eingestellten Soll-Vorgabe, Absolutvorgabe (10.10), verglichen. Auch dieses Ergebnis wird dem Gatter (10.8) zugeführt. Nur wenn an beiden Vergleichsstellen die Ist-Angaben größer sind, liegt an Gatter (10.8) ein Signal über den als richtig erkannten Code einer Ampulle an.

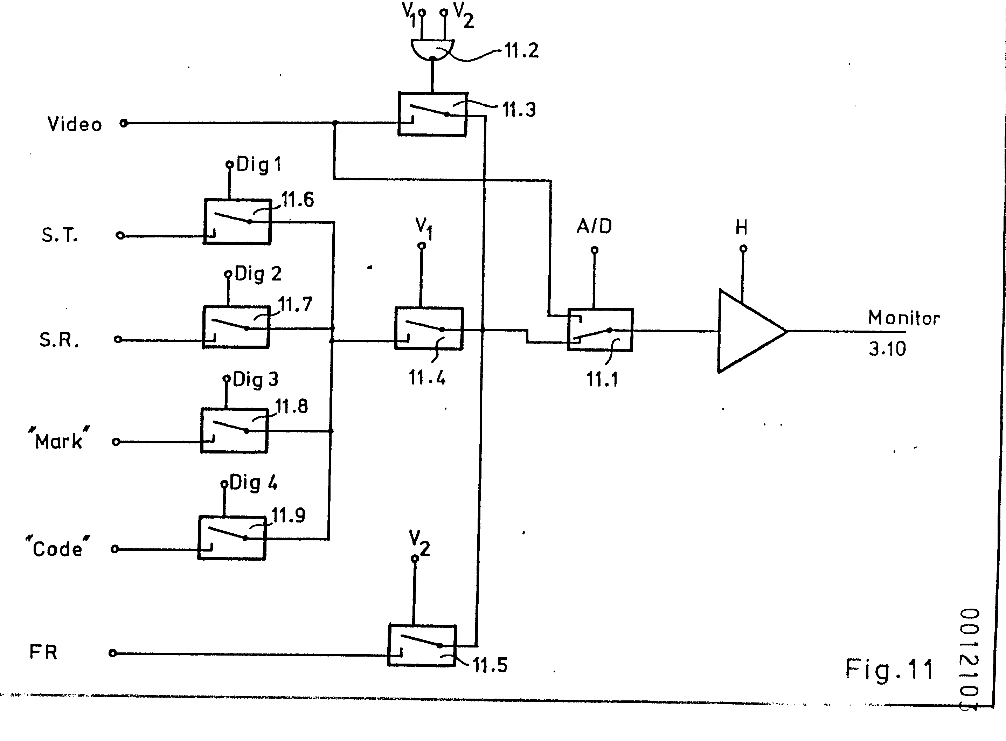

Der Bildmischer (3.9) in Fig. 11 bietet die Möglichkeit, verschiedene Signale anzuwählen und dem Monitor (3.10) zuzuführen. Durch Betätigen des elektronischen Schalters (11.1) mittels der Vorgabe A bzw. D kann das Videosignal (Originalbild) bzw. ein kombiniertes Programm aus Video- und Digitalsignalen sichtbar gemacht werden. Durch die Steuersignale V1, V2 und V1V2 an Gatter (11.2) wird eine Aufteilung der anliegenden Signale über das gesamte Bild mittels der Schalter (11.3, 11.4, 11.5) erreicht. Im oberen Teil des Bildes, gesteuert durch V1V2, im unteren Teil, gesteuert durch V2, ist die Referenzfrequenz FR sichtbar. Durch Anwahl der Schalter (11.6) bis (11.9) mittels der Vorgaben Dig 1 bis Dig 4 können im mittleren Teil die Signale S.T., S.R., "Mark" und "Code" eingeblendet werden. Mit Hilfe dieser Einblendungen ist es ohne Einsatz aufwendiger Meßgeräte möglich, folgende Einstellungen vorzunehmen: Justage von Beleuchtungsstärke, Beleuchtungsfeld, Abtastfeld, Beleuchtungswinkel, Bildschärfe und Abbildungsmaßstab. Außerdem ist die Zahl der Abtastungen mit richtig erkanntem "Mark"- und "Code"-Signal ablesbar.

Es ist aber auch bei der Erkennung des Markierungsringes möglich, nicht nur den Mittenimpuls, sondern auch den linken und rechten Randimpuls abzuspeichern. Bei der Prüfung der Code-Informationen werden dann alle drei Positionen eines möglichen Code-Ringes getrennt geprüft.

Falls durch Drucktoleranzen oder Abstandsschwankungen eine Längenänderung des gesamten Codezeichens auftritt, wird im letztgelesenen Codering die linke oder rechte Seiteninformation nicht mehr erkannt. In diesem Fall kann eine automatische Korrektur auf zwei Arten erfolgen: Entweder durch Nachstellen der Abbildungsoptik oder durch elektronisches Regeln der Referenzfrequenz FR. Hiermit können in gewissen Grenzen Abstandsschwankungen ausgeregelt werden.

P a t e n t a n s p r ü c h e

1.) Verfahren zur automatischen berührungslosen Abtastung und Erkennung von auf Aufzeichnungsträgern aufgebrachten, eben und/oder räumlich verlaufenden Codezeichen durch optische Remission für die Identifikation, Messung, Überwachung, Kontrolle und Steuerung von einen gleich- oder taktförmigen Strom bildenden Aufzeichnungsträgern bei Stück- und Verteilungsprozessen, dadurch gekennzeichnet, daß Codezeichen mehrfach unabhängig voneinander abgetastet und erkannt werden und mit einem einstellbaren SOLL-Codezeichen verglichen werden, wobei die Anzahl der GUT-Lesungen vorgewählt wird und bei deren Unterschreitung ein Signal ausgegeben wird.

2. Verfahren nach Anspruch 1, dadurch gekennzeichnet, daß die Abtastung von Codezeichen, die aus von gegeneinander parallel verschobenen kongruenten Linien begrenzten Codezeichen-Elementen (1.5) bestehen (1.15), linear zeilenweise erfolgt, wobei die Zeilen parallel zur Verschieberichtung verlaufen und die Anzahl der Abtastungen durch die Anzahl der zeilenförmigen Abtastbahnen vorgegeben wird.

3. Verfahren nach Anspruch 1, dadurch gekennzeichnet, daß die Abtastung unter einem Winkel ß (1.8) erfolgt, der von den geometrischen Maßen des ausnutzbaren Codefeldes und durch die Anzahl der zur Mehrfach-Abtastung herangezogenen Zeilen abhängt, vorzugsweise 90°.

4.) Verfahren nach Anspruch 1, dadurch gekennzeichnet, daß
die Abtastung von Codezeichén, die von <sup>aus</sup> konzentrischen
Kreisscharen als Konturen begrenzten Codezeichen-
Elementen (1.5) bestehen und Kreisringe darstellen (1.16),
von einem Mittelpunkt ausgehend radial erfolgt, wobei
die Anzahl der Abtastungen durch die Anzahl der Winkelstellungen des Abtaststrahls, unter denen jeweils
radiale Abtastung erfolgt, vorgegeben wird.

5. Verfahren nach Anspruch 1, dadurch gekennzeichnet, daß
die Abtastung von Codezeichen, die <sup>aus</sup> von Kreishalbmesserscharen als Konturen begrenzten Codezeichenelementen (1.5)
bestehen und Kreisringsektoren darstellen (1.17), in
konzentrischen Bahnen erfolgt, wobei die Anzahl der Abtastungen durch die Anzahl der konzentrischen Bahnen
vorgegeben wird.

6. Verfahren nach Anspruch 1, 2, 3, 4 und 5, dadurch gekennzeichnet, daß zur mehrfachen voneinander unabhängigen
Einzel-Erkennung für jede abgetastete Bahn bzw. Zeile zunächst die Kontrollmerkmale der Codezeichen gelesen werden,
indem vorzugsweise nach richtiger Erkennung der Breite des
Startmerkmals, von dessen Mittenposition ausgehend, im
Grundrasterabstand der Codezeichen-Elemente als Vergleichsmaßstab Impulse erzeugt werden, die die Abtastzeitpunkte der Codezeichen-Elemente festlegen, nur nach richtiger
Erkennung ("Mark") der konstanten Kontrollmerkmale einen
Vergleich zwischen im Speicher vorliegendem Ist-Code und
dem vorgegebenen Soll-Code in der zwischen zwei Abtastungen zur Verfügung stehenden Zeit vornimmt ("Code"),
wobei das Ergebnis dieses Vergleichs zur Auswertung in
einem Zähler gespeichert wird.

7.) Verfahren nach Anspruch 1, 2, 3, 4 und 5, dadurch gekennzeichnet, daß zur Gesamt-Erkennung und Entscheidung über die
Identität eines Aufzeichnungsträgers durch die Anzahl der Abtastungen, die Anzahl der gültigen Erkennungen und die Anzahl der als gültig erkannten Übereinstimmungen des SOLLmit dem IST-Code entschieden wird.

8.) Verfahren nach Anspruch 6, dadurch gekennzeichnet, daß
herstellungs- und anwendungsbedingte Abbildungsfehler
durch ein Korrektursignal ausgeglichen werden, welches
aus der Phasendifferenz der gemessenen Ringfolgefrequenz
hergeleitet wird.

9.) Verfahren nach Anspruch 1, dadurch gekennzeichnet, daß
die Aufzeichnungsträger Rundkörper sind, insbesondere
Spießampullen (3.2), auf deren Umfang    mittels Siebdruckverfahren ein Codezeichen (3.3) in Form von Ringen
aufgebracht ist.

10.) Verfahren nach Anspruch 3, dadurch gekennzeichnet, daß das Codezeichen aus Ringen gleicher Breite und gleichen Mittenabstandes besteht, wobei der erste Ring als Startring (1.11), der zweite (1.12) und der letzte (1.14) stets unbedruckt, als Pause dienen, die dazwischen liegenden Ringe zur Informationsübertragung genutzt werden und der letzte bedruckte Codering (1.13) zusammen mit dem ersten, zweiten und letzten Ring zu Kontrollfunktionen herangezogen werden.

11.) Verfahren nach Anspruch 1 und 9, dadurch gekennzeichnet, daß die Aufzeichnungsträger einzeln (2.10) oder in Gruppen (2.12) an der Abtast-Vorrichtung mit einer Transportgeschwindigkeit zwischen Null und einem maximalen Wert vorbeigeführt werden und ihre Längsachsen unter einem beliebigen Winkel zur Transportrichtung (2.6) stehen können, wobei die Abtast-Richtung (2.5) vorzugsweise parallel zur Längsachse der Ampullen gewählt wird.

12.) Vorrichtung zur Durchführung des Verfahrens nach Anspruch 1, bestehend aus einer Projektions-Anordnung (3.4, 4.2) und einer opto-elektronischen Wandler-Anordnung (3.1) als Abtast-Vorrichtung, einer zentralen Takteinheit (3.5), einer Pegel-Separierungs-Anordnung (3.6) sowie einer mehrstufigen Anordnung (3.7) zur Erkennung der Kontroll-Merkmale und einer Auswerteanordnung (3.8) zur Gesamt-
Erkennung und Identifikations-Entscheidung.

13.) Vorrichtung nach Anspruch 12, dadurch gekennzeichnet,
daß die Projektions-Anordnung (3.4, 4.2) aus einer Beleuchtungs-Vorrichtung (3.4) und einem Abbildungs-System
(4.2) besteht, wobei sich die Beleuchtungs-
Vorrichtung (3.4) aus einer elektronisch geregelten Lichtquelle (4.1) und einem Dämpfungsglied (4.8) zusammensetzt.

14.) Vorrichtung nach Anspruch 13, dadurch gekennzeichnet,
daß die optische Achse der Lichtquelle unter einem Winkel $\alpha$
$> 0°$ bis $< 90°$, vorzugsweise $10°$ bis $40°$, zur Transportrichtung angeordnet ist.

15.) Vorrichtung nach Anspruch 12, dadurch gekennzeichnet,
daß zur Umwandlung des optisch analog vorliegenden Bild-
Musters in einen Signalstrom analoger Signale als optoelektronische Wandler-Anordnung vorzugsweise eine Fernsehkamera (3.1) verwendet wird.

16.) Vorrichtung nach Anspruch 12, dadurch gekennzeichnet,
daß die Pegel-Separierungs-Anordnung (3.6) aus einem
Schwellwertschalter besteht, dessen Entscheidungsschwelle an die jeweilige Zeileninformation (1.4) adaptiv an-

gepaßt wird.

17.) Vorrichtung nach Anspruch 12, dadurch gekennzeichnet, daß ein Monitoranschluß vorhanden ist, der die gleichzeitige Darstellung der digitalisierten Signale, des Zustands des Speichers und der Vergleichsfrequenz gestattet, wobei eine elektrische Einheit (3.9) die notwendige Umformung und Mischung der sichtbar zu machenden Signale übernimmt und sie dem Monitor (3.10) zuführt.

0012103

1.5

β

1.8

1.4

1.11    1.12        1.13      1.14

1.15

Fig. 1a

0012103

1.4   1.5

1.17

1.4   1.5

1.16

Fig.1b

Fig.2

Fig. 4

Fig. 5

Fig.3

Fig.6

Fig.7

Fig. 8

Fig. 9

Fig. 10

Fig. 11

Europäisches
Patentamt

**EUROPÄISCHER RECHERCHENBERICHT**

Nummer der Anmeldung
0012103

EP 79 73 0011

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | <u>US - A - 4 044 227</u> (THE UPJOHN CY) <br> * Figuren 1-3,6,7,9; Spalte 3, Zeile 39 bis Spalte 6, Zeile 32; Spalte 7, Zeile 6 bis Spalte 16, Zeile 38; Spalte 19, Zeilen 8- 28 * | 1-3,6, 7,9,10, 12,15, 17 |
| | -- | |
| | <u>US - A - 3 761 725</u> (TEXAS <u>INSTRUMENTS</u>) <br> * Figuren 1,2; Spalte 1, Zeile 42 bis Spalte 2, Zeile 36; Spalte 3, Zeilen 11-51 * | 16 |
| | ---- | |

**KLASSIFIKATION DER ANMELDUNG (Int.Cl. 3)**

G 06 K 7/10

**RECHERCHIERTE SACHGEBIETE (Int. Cl. 3)**

G 06 K 7/10
7/12
B 07 C 5/34

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| Den Haag | 28-02-1980 | FORLEN |

EPA form 1503.1 06.78